# EUROPÄISCHE PATENTANMELDUNG

(11) **EP 2 423 530 A2**
(43) Veröffentlichungstag der Anmeldung: **29.02.2012**
(21) Anmeldenummer: 11173942.1
(22) Anmeldetag: 14.07.2011
(51) Int. Cl.: F16D 41/12

(54) **Freilaufkupplung**

(30) Priorität: 30.08.2010 DE 102010039951
(71) Anmelder: Robert Bosch GmbH, 70442 Stuttgart (DE)
(72) Erfinder: Lorenz, Dominik, 76547 Sinzheim (DE)

(57) **Zusammenfassung**

Die erfindungsgemäße Freilaufkupplung weist einen Gleitring (210) auf, der mit einer Welle des Fahrzeugs verbunden ist. Weiterhin weist der Gleitring Nuten (260) auf, in die Klinken eingebracht werden können. Zur besseren Übertragung einer ersten Kraft von den wenigstens zwei Klinken (220,300) auf den Gleitring ist vorgesehen, dass die Nuten und die Klinken formschlüssig ineinander passen, indem die Form der Nuten auf die Form der Klinken angepasst sind. Weiterhin, weist der Gleitring (210) wenigstens zwei Federn (230) auf, die umlaufend nebeneinander auf dem Gleitring (210) angeordnet sind, wobei vorgesehen ist, dass die Feder (230) eine zweite Kraft auf die Klinken (220,300) in axialer Richtung ausüben.

## Beschreibung

Die Erfindung betrifft eine Freilaufkupplung zum Einsatz im einem Fahrzeug sowie ein mit dieser Freilaufkupplung ausgestattetem Fahrzeug.

### Stand der Technik

In den letzten Jahren wurden zunehmend Fahrzeuge entwickelt, die einen elektrischen Antrieb aufweisen. Insbesondere die Anwendung elektrischer Antriebe bei Fahrrädern stößt auf immer größeres Interesse. Dabei werden Elektromotoren sowohl als separate Antriebseinheit als auch in Kombination mit dem manuellen Antrieb verwendet. Als Energielieferant kommen dabei Energiequellen in Form von Akkumulatoren oder Batterien zum Einsatz, die entweder auf oder unter dem Gepäckträger bzw. alternativ auch an der Sattelstange montiert sind.

Beim Einsatz verschiedener Antriebseinheiten in einem Fahrzeug ist die Notwendigkeit gegeben, die Abstimmung zwischen beiden Antriebseinheiten zu regeln. So ist beispielsweise bei einem Elektro-Fahrrad sicherzustellen, dass sowohl der Pedalantrieb mittels Muskelkraft als auch der Antrieb mittels Elektromotor nebeneinander möglich ist, ggf. sogar gleichzeitig, falls lediglich eine unterstützende Wirkung des Elektromotors gewünscht wird.

Eine Möglichkeit, verschiedene Antriebseinheiten in einem gemeinsamen Antrieb zu verwenden, besteht in der Verwendung einer Freilaufkupplung bzw. eines Freilaufs. Hierbei kann die zweite Antriebseinheit unterstützend in die Antriebsachse eingespeist werden, ohne dass die dominierende erste Antriebseinheit behindert oder sogar ausgekoppelt werden muss.

Typische Freilaufkupplungen bestehen aus Elementen, bei denen An- und Abriebsteil in einer Drehrichtung gegeneinander frei beweglich sind uns somit eine Leerlaufrichtung aufweisen. In der anderen Drehrichtung sind der An- und Abriebsteil jedoch gekoppelt, so dass eine Sperrrichtung vorliegt. Mit Hilfe dieser Sperrrichtung kann die zusätzlich Antriebskraft der zweiten Antriebseinheit auf die Antriebsachse gebracht werden.

Wie u.a. aus Roloff/Matek "Maschinenelemente", 17. Auflage im Kapitel 13.4.4 bekannt ist, arbeiten die Übertragungsglieder der An- und Abtriebsteile entweder formschlüssig (z.B. als Klinkenfreilauf) oder reibschlüssig (z.B. als Klemmrollenfreilauf).

### Offenbarung der Erfindung

Mit der vorliegenden Erfindung wird eine Freilaufkupplung für ein Fahrzeug sowie ein mit dieser Freilaufkupplung ausgestattetes Fahrzeug beschrieben. Dabei kann es sich sowohl um ein elektrisch betriebenes Fahrrad, einen Elektroroller, einen Elektrokarren, einen Rollstuhl, ein elektrisches Skateboard oder sonstiges elektrisch angetriebenes Fahrzeug handeln, bei dem der Elektromotor zusätzlich zu einem manuell aufgebrachten Antriebsmoment eingesetzt werden kann.

Die erfindungsgemäße Freilaufkupplung weist einen Gleitring auf, der mit einer Welle des Fahrzeugs verbunden ist. Vorteilhafterweise ist diese Welle dazu geeignet, das Fahrzeug direkt oder indirekt, beispielsweise mittels einer Umlenkung anzutreiben. Weiterhin weist der Gleitring Nuten auf, in die Klinken eingebracht werden können. Zur besseren Übertragung einer ersten Kraft von den wenigstens zwei Klinken auf den Gleitring ist vorgesehen, dass die Nuten und die Klinken formschlüssig ineinander passen, indem die Form der Nuten auf die Form der Klinken angepasst sind. Diese Form ist vorteilhafterweise an einem Ende derart ausgestaltet, dass ein Anschlag für die Klinken vorliegt. Die gegenüberliegende Seite der Nut ist dagegen offen, so dass die Klinke gegebenenfalls über eine entsprechend geformte Rutsche aus der Nut herausgezogen werden kann. Zur Realisierung der Freilaufkupplung kann zusätzlich vorgesehen sein, dass der äußere Bereich des Gleitrings zwischen den Nuten derart ausgestaltet ist, dass die Klinken bei einer Drehbewegung des Gleitrings ohne dass eine Kraft übertragen wird, über entsprechend geformte Rutschen von einer Nut in die nächste bewegt werden können.

Der Kern der Erfindung besteht nun darin, dass der Gleitring in seinem äußeren Bereich wenigstens zwei Federn aufweist, die jeweils auf wenigstens eine Klinke eine zweite Kraft in axialer Richtung des Gleitrings ausüben. Dabei kann besonders vorgesehen sein, dass die Federn seitlich von den Klinken und wenigstens teilweise umlaufend um den Gleitring angeordnet sind.

Der Vorteil einer derartigen Ausgestaltung liegt darin, dass die Kraftübertragung von der Klinke auf den Gleitring durch einen solchen Aufbau homogen erfolgt. Dies wird dadurch erreicht, dass zwei Klinken verwendet werden und somit keine Verdrehung des Gleitrings erfolgt. Weiterhin ist von Vorteil, dass die Federn beidseitig an jeder Klinke angebracht sind und somit ein massiver Querschnitt zur homogenen Übertragung der Kraft zur Verfügung steht. Darüber hinaus erlauben die beiden Federn auch eine bessere Führung als die Ausgestaltung mit nur einer Feder.

Zur besseren Anpassung an den Gleitring kann vorgesehen sein, dass die Federn auf dem radialen Außenbereich des Gleitrings angeordnet sind. Dabei können die Federn sowohl Kreissegmente als auch nahezu den gesamten Umfang abdecken. Bei der Verwendung von Kreissegmenten ist darauf zu achten, dass die Befestigung der einzelnen Klinken ausreichend Spielraum zur Erfüllung der Freilaufeigenschaft haben.

Typischerweise werden die Federn in Form von Ringen ausgestaltet, die am Gleitring befestigt werden. Die Klinken werden vorteilhafterweise gesintert. Dies hat den Vorteil, dass nahezu keine nachträgliche Bearbeitung der Klinken notwendig ist.

Wie bereits ausgeführt, sind jeder Klinke wenigstens zwei Federn zugeordnet. Zur Halterung der Federn auf dem Gleitring kann dabei vorgesehen sein, dass die Klinken seitliche Ausbuchtungen, Nasen oder Vorsprünge aufweisen, auf denen die Federn aufliegen und die Klinken in axialer Richtung drücken. Dies hat den Vorteil, dass die Federn einfach nach dem Einsetzen der Klinken aufgesetzt werden können.

Zur besseren Kraftübertragung kann vorgesehen sein, die Klinken gegenüberliegend auf dem Gleitring anzuordnen. Darüber hinaus kann vorgesehen sein, dass der Gleitring in seinem Außenbereich Nuten im Abstand von ca. 18° aufweist. Bei der Verwendung einer optionalen Ausgestaltung mit jeweils zwei sich gegenüberliegenden Klinkenpaaren, die um beispielsweise 81° zueinander versetzt sind, kann so alle 9° eine Rastposition vorliegen.

Zur Realisierung der Freilaufkupplung ist weiterhin vorgesehen, dass die erste Kraftbeaufschlagung auf die Klinken, beispielsweise durch einen angeschlossenen Motor, den Gleitring in eine erste Drehrichtung bewegt. Fehlt diese erste Kraftbeaufschlagung, ermöglicht die zweite Kraft in axialer Richtung durch die Federn ein Mitführen der Klinken bei der Drehung des Gleitrings, beispielsweise durch eine Pedalbewegung des Fahrers.

Der Gleitring kann eigenständig mit einer Achse des Fahrzeugs verbunden sein. Darüber hinaus kann jedoch auch vorgesehen sein, dass zwischen dem Gleitring und der Achse ein weiteres Element, z.B. ein Innenring angeordnet ist, auf dem der Gleitring aufgesetzt wird. Insgesamt ist jedoch vorgesehen, dass der Gleitring bzw. der Gleitring/Innenring-Verbund mit der Achse wirk- und kraftschlüssig verbunden ist. Dies ist insbesondere von Vorteil, wenn die Achse zum Antrieb des Fahrzeugs verwendet wird. Für diesen Fall kann durch die Verbindung der Klinken mit einem über die Pedalkraft durch den Fahrer hinausgehendes Antriebssystem des Fahrzeugs, z.B. ein Elektromotor, ein zusätzliches Antriebsmoment auf die Achse übertragen werden.

Weitere Vorteile ergeben sich aus der nachfolgenden Beschreibung von Ausführungsbeispielen bzw. aus den abhängigen Patentansprüchen.

### Kurze Beschreibung der Zeichnungen

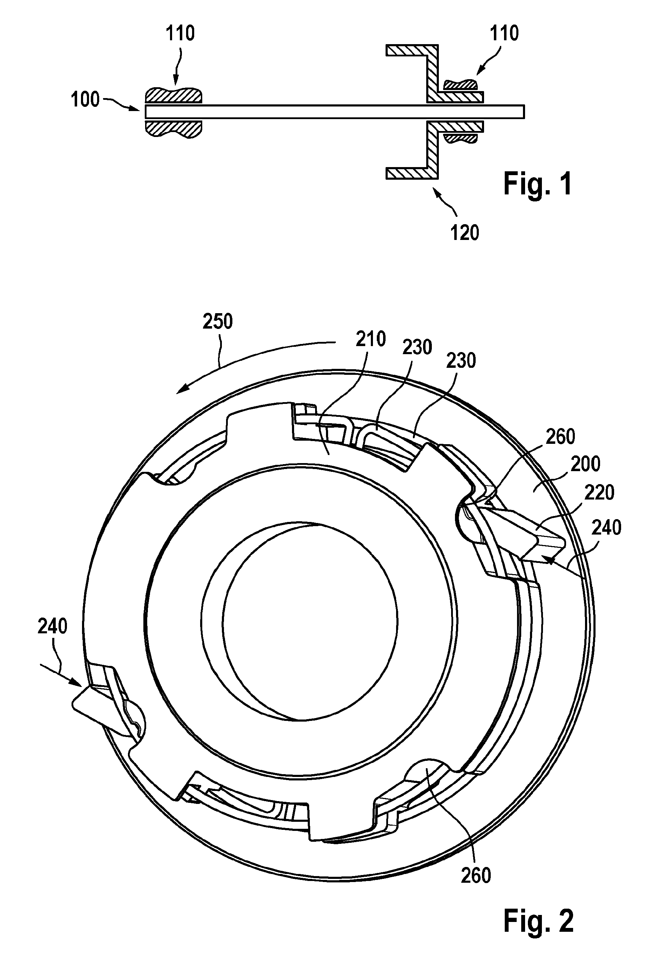

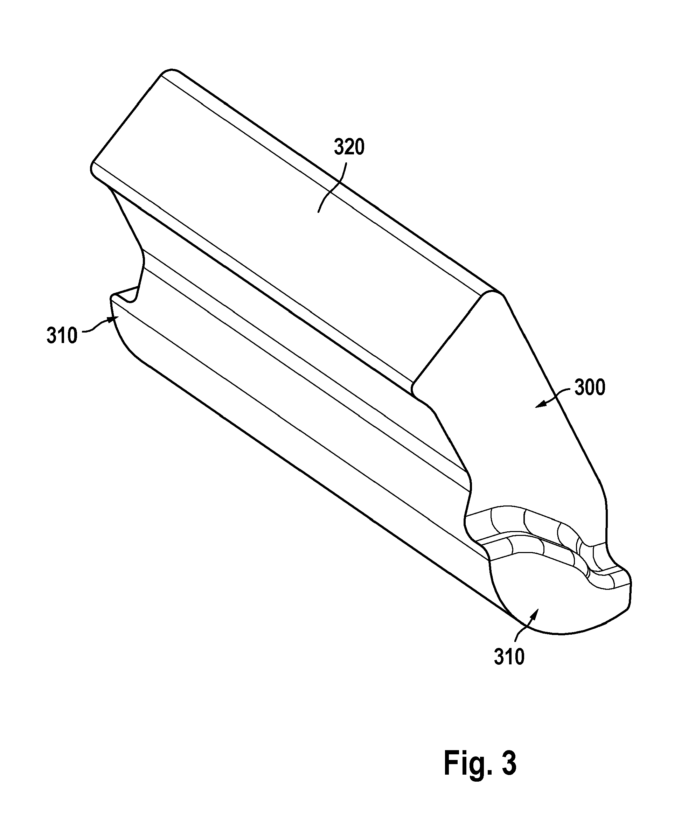

Die Figur 1 zeigt eine Skizze, die den Antrieb eines Fahrzeugs mittels Tretwell mit aufgesetztem Stirnradsatz darstellt. Figur 2 zeigt die erfindungsgemäße Freilaufkupplung auf einem Innenring. Mit der Figur 3 wird eine der Klinken im Detail dargestellt.

### Ausführungsformen der Erfindung

In der nachfolgenden Beschreibung der Ausführungsform wird die Erfindung am Beispiel eine elektrisch betriebenen Fahrrads beschrieben. Die Erfindung ist jedoch hierauf nicht beschränkt. Sie kann vielmehr bei jedem Fahrzeug eingesetzt werden, bei dem eine Freilaufkupplung verwendet wird.

In der Figur 1 ist schematisch eine Tretwelle 100 dargestellt, die sich in einem Lager 110 befindet. Beim Einsatz einer derartigen Tretwelle 100 an einem Fahrrad erfolgt die Drehbewegung dieser Tretwelle 100 durch die Pedalbetätigung durch den Fahrer. Es ist jedoch auch möglich, dass diese Drehbewegung auf andere Art und Weise erzeugt wird, z.B. durch einen Motor. Auf die Tretwelle 100 ist ein Stirneinsatz 120 aufgebracht, der mit dem Kettenblatt verbunden ist. Durch einen Freilauf sind die Tretwelle 100 und der Stirneinsatz derart miteinander verbunden, dass sie in einer Richtung relativ zueinander bewegt werden können, während sie sich in der anderen Richtung im Verbund miteinander drehen.

Mit Hilfe eines derartigen Verbunds ist es möglich, das Fahrzeug bzw. das Fahrrad mit zwei Antriebmomenten zu betreiben, ohne dass die beiden Antriebsmomente sich gegenseitig behindern. So kann das mit einem elektrischen Antrieb ausgestattete Fahrrad beispielsweise mittels mechanischem Pedalantrieb über die Tretwelle 100 oder auch über ein mit dem Stirneinsatz 120 verbundenen Motor angetrieben werden. Je nach Steuerung des elektrischen Fahrrads kann so ein eigenständiger Antriebe durch den Motor aber auch eine rein unterstützende Funktion realisiert werden. Letzteres kann dadurch erreicht werden, indem das vom Motor auf den Stirnradeinsatz 120 eingebrachte Drehmoment in Abhängigkeit vom Drehmoment durch die Tretwelle 100 geregelt wird.

In Figur 2 ist ein Gleitring 210 mit einem Innenring 200 dargestellt, der auf dem Stirnradeinsatz 120 montiert werden kann. Mit Hilfe dieses Gleitrings 210 kann eine Kraftübertragung vom Motor auf den Stirnradeinsatz 120 bzw. ein Drehmoment durch den (elektrischen) Motor erzeugt werden. In der vorliegenden Erfindung erfolgt diese Kraftübertragung durch Klinken 220 auf den Gleitring 210. Diese Klinken 220 sind an einem Ende derart ausgeformt, dass sie in entsprechende Nuten 260 des Gleitrings 210 hineinpassen. Gehalten werden die Klinken 220 durch zwei seitlich auf den Klinken 220 aufsitzende Federn 230. Wie in der Figur 2 ersichtlich ist, bestehen die Federn 230 aus ringförmig gebogenen Drähten, die im Außenbereich um den Gleitring 210 herum angeordnet sind. Während in der Figur 2 Drahtfedern 230 gezeigt werden, die fast vollständig um den Gleitring 210 herum laufen, kann auch vorgesehen sein, die Drahtfedern 230 nur in Teilsegmenten zu montieren. Durch die Befestigung der Drahtfedern 230 am Gleitring 210 wird auf die Klinken 220 eine zweite Kraft ausgeübt, die die Klinken 220 in axialer Richtung festhalten.

Die Form der Nuten 260 sind derart auf die Klinken 220 angepasst, dass eine gute Kraftübertragung und somit eine Drehbewegung 250 erfolgt und gleichzeitig ein Freilauffunktion realisiert werden kann. So ist die Nut 260 an einem Ende derart ausgestaltet, dass sie einen ersten Anschlag für ein Ende der Klinke 220 aufweist. Am unteren Ende der Nut 260 ist eine kleine Vertiefung vorgesehen, so dass die Klinke auch bei einer kleinen Kraft 240 an Ort und Stelle verbleibt, ohne herauszurutschen. Dies wird zudem noch durch die zweite Kraft durch die Drahtfedern ermöglicht, die axial auf die Klinken 220 wirkt. Gegenüber dem Anschlag der Nut 260 ist ein abgeflachter Teil vorgesehen, durch den sich die Klinke 220 bei einem Freilauf gegebenenfalls aus der Vertiefung entfernen kann. Hierbei kann in einer Entfernung ein zweiter Anschlag vorgesehen sein, durch den verhindert wird, dass sich die Klinke 220 zu weit vom ersten Anschlag entfernt.

Wie in der Figur 2 weiterhin zu sehen ist, sind zwei Klinken 240 vorgesehen, die am Gleitring gegenüber in 180°-Position angeordnet sind. Diese Anordnung hat der Vorteil, dass die Kraft 240 vom Motor nicht nur über eine Klinke 220 auf den Gleitring 210 übertragen wird. Durch die Verteilung der zu übertragenden Kraft auf zwei Elemente ist die einzelne Klinke nicht so hoch belastet, so dass das ganze System stabiler ausgebildet ist. Alternativ kann durch die zwei Klinken 220 auch eine größere Gesamtkraft und somit ein größeres Drehmoment erzeugt werden, da eine größere Auflagefläche vorliegt.

Durch die Verwendung zweier gegenüberliegender Klinken 220 kann auch eine ungleiche Kraftwirkung auf den Gleitring 210 vermieden werden. Dies hat vorteilhafte Auswirkungen auf die Lagerung des Gleitrings auf der Achse, so dass die Reibung vermindert und der Wirkungsgrad erhöht wird.

In einem weiteren Ausführungsbeispiel ist vorgesehen, ein zweites Klinkenpaar zu verwenden (in Figur 2 nicht gezeigt). Dieses Klinkenpaar kann in einem weiteren Nutenpaar auf dem Gleitring 210 angeordnet werden. Durch das zweite Klinkenpaar kann erreicht werden, dass eine Rastposition schon bei einer kleineren Drehung als 180° erreicht werden. Wie in der Figur 2 abgebildet, kann bei einer 4-Klinkenausführung vorgesehen sein, die vier Klinken nicht unter 90° zueinander zu versetzen sondern um 81°.

Werden im Außenring alle 18° Nuten 260 vorgesehen, ist bei einer 4-Klinkenanordnung der oben beschriebenen Art nach allen 9° eine Rastposition erreicht. Neben der Geräuschreduzierung wird auch die Belastung auf Dauer herabgesetzt, da sich mit einer gewissen Wahrscheinlichkeit die Klinkenpaar in der Nutzung abwechseln.

In einer optionalen Weiterbildung der Erfindung ist vorgesehen, dass die Klinken 230 nicht starr mit dem Motor bzw. dem Antrieb verbunden sind. Dies hat den Vorteil, dass der Verschleiß reduziert wird, da die Klinken 220 bei fehlender Kraft 240 weniger bewegt werden und somit eine geringere Reibung erfahren.

Die Figur 3 zeigt eine Klinke 300, wie sie in der Figur 2 verwendet wird. Dabei ist deutlich an den beiden Seiten jeweils eine Ausbuchtung 310 zu erkennen, auf der die Feder 230 aufliegt. Durch die massive Ausgestaltung der Klinke 300 kann eine große Auflagefläche 320 erzeugt werden, die komplett zur Aufnahme der Kraft durch den (elektrischen) Motor verwendet werden kann. Weiterhin ist bei einer massiven Auflagefläche eine homogene Kraftaufnahme und - weitergabe an den Gleitring möglich, so dass eine Verdrehung der Klinke 300 gegenüber einer gabelartigen Ausführung mit dazwischen liegender Feder nicht erfolgen kann.

Der Innenring 200 kann u.a. aus einem Sinterstahl hergestellt werden und gegebenenfalls nachträglich bearbeitet werden. Während der Gleitring beispielsweise aus Bronze erzeugt werden kann, werden die Klinken ebenfalls sintertechnisch hergestellt. Eine nachträgliche Bearbeitung der Klinken ist jedoch üblicherweise nicht nötig, da die Form der Klinken entsprechend hergestellt werden kann. Die Drahtfedern werden gebogen und in den Gleitring eingesetzt. Der Innenring 200 kann in einer weiteren Ausführung auch entfallen, jedoch hat er eine zusätzliche Zentrierwirkung.

## Patentansprüche

1. Freilaufkupplung für ein Fahrzeug, wobei
- die Freilaufkupplung einen Gleitring (210) aufweist,
wobei der Gleitring (210) mit einer Welle des Fahrzeugs verbunden werden kann, die insbesondere zum Antrieb des Fahrzeugs verwendet wird, und
- der Gleitring (210) Nuten (260) aufweist, in die wenigstens zwei Klinken (220, 300) formschlüssig einbringbar sind,
wobei die Nuten (260) derart ausgebildet sind, dass die Klinken (220, 300) bei einer ersten Kraftbeaufschlagung kraft- und formschlüssig am Gleitring (210) anliegen,
**dadurch gekennzeichnet dass**
der Gleitring (210) wenigstens zwei Federn (230) aufweist, die umlaufend nebeneinander auf dem Gleitring (210) angeordnet sind, wobei vorgesehen ist, dass die Federn (230) eine zweite Kraft auf die Klinken (220, 300) in axialer Richtung ausüben.

2. Freilaufkupplung nach Anspruch 1, **dadurch gekennzeichnet dass** die Federn (230) auf dem radialen Außenbereich des Gleitrings (210) angeordnet sind.

3. Freilaufkupplung nach Anspruch 1 oder 2, **dadurch gekennzeichnet dass** jeder Klinke (220, 300) zwei Federn (230) zugeordnet sind, wobei insbesondere vorgesehen ist, dass jede Klinke (220, 300) auf zwei gegenüber liegenden Seiten jeweils ein nach außen gerichteter Vorsprung (310) aufweist, auf den jeweils eine Feder (230) aufliegt.

4. Freilaufkupplung nach einem der vorherigen Ansprüche, **dadurch gekennzeichnet** der radiale Außenbereich des Gleitrings (210) Nuten (260) im Abstand von ca. 18° aufweist.

5. Freilaufkupplung nach einem der vorhergehenden Ansprüche, **dadurch gekennzeichnet dass** vier Klinken vorgesehen sind, wobei jeweils zwei Klinken (220, 300) ein Paar bilden und in 180° zueinander versetzt angeordnet sind, wobei insbesondere vorgesehen ist, dass beide Paare um 81 ° zueinander versetzt angeordnet sind.

6. Freilaufkupplung nach einem der vorherigen Ansprüche, **dadurch gekennzeichnet dass** bei der ersten Kraftbeaufschlagung auf die Klinken (220, 300) die Freilaufkupplung in eine erste Drehrichtung (250) bewegt wird, wobei vorgesehen ist, dass die zweite Kraftbeaufschlagung auf die Klinken durch die Federn ein Mitführen der Klinken (220, 300) ohne erste Kraftbeaufschlagung ermöglicht.

7. Freilaufkupplung nach einem Anspruch 6, **dadurch gekennzeichnet dass** die Klinken bei einer Drehbewegung in die erste Drehrichtung (250) ohne erste Kraftbeaufschlagung sich kraftschlüssig von den Nuten (260) lösen, wobei insbesondere vorgesehen ist, dass die Klinken (220, 300) bei einer Bewegung der Freilaufkupplung in die zweite Drehrichtung von einer Nute in eine benachbarte Nute (260) einklinken.

8. Freilaufkupplung nach einem der vorhergehenden Ansprüche, **dadurch gekennzeichnet dass** die Klinken (220, 300) mit einem Antriebssystem des Fahrzeugs verbunden sind, welches über die erste Kraftbeaufschlagung eine Drehung des Gleitrings (210) ermöglicht.

9. Freilaufkupplung nach einem der vorhergehenden Ansprüche, **dadurch gekennzeichnet dass** der Gleitring (210) auf einen Innenring (200) aufgesetzt wird, der mit der Achse wirk- und kraftschlüssig verbunden ist.

10. Fahrzeug mit Pedalantrieb, wobei eine den Pedalantrieb unterstützende oder zumindest teilweise ersetzende weitere Antriebseinheit vorgesehen ist, **dadurch gekennzeichnet dass** mittels der Freilaufkupplung gemäß einem der Ansprüche 1 bis 9 eine Kraftübertragung von der weiteren Antriebseinheit auf eine zum Antrieb verwendbare Achse des Fahrzeugs übertragen wird.
